# EUROPEAN PATENT SPECIFICATION

(11) **EP 2 103 511 B1**
(45) Date of publication and mention of the grant of the patent: **14.07.2010**
(21) Application number: 08005101.4
(22) Date of filing: 19.03.2008
(51) Int. Cl.: B62K 11/12, F02M 35/16

(54) **Air intake system for supplying combustion air to a motor engine of a motorcycle**
Lufteinlasssystem zur Zufuhr von Verbrennungsluft in einen Motor eines Motorrads
Système d'entrée d'air pour fournir de l'air de combustion au moteur d'une motocyclette

(43) Date of publication of application: 23.09.2009
(73) Proprietor: Kwang Yang Motor Co., Ltd., Kaohsiung (TW)
(72) Inventor: Hsieh, Jung-Hung, Feng-Shan City Kaohsiung Hsien (TW)
(74) Representative: Munk, Ludwig

(56) References cited:
- EP-A- 1 083 330
- EP-A- 1 515 037
- EP-A- 1 553 013
- JP-A- 10 035 559
- US-A- 4 678 054
- US-A1- 2006 027 202
- US-A1- 2007 149 105

## Description

This invention relates to an air intake system, more particularly to an air intake system for supplying combustion air to a motor engine of a motorcycle.

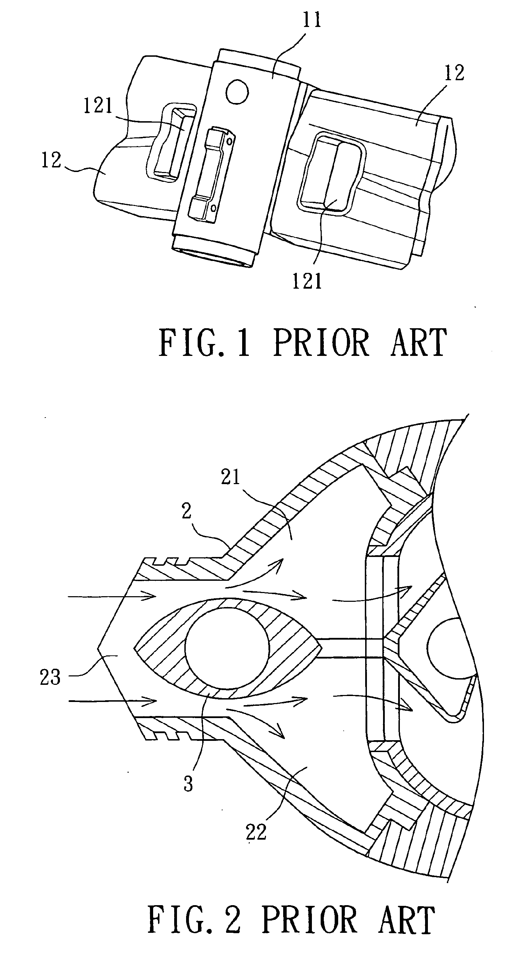

Referring to Fig. 1, a conventional air intake system employed in a motorcycle includes a head tube 11 which extends along a steering axis, and left and right joining portions 12 which extend laterally and rearwardly from the head tube 11 for connecting left and right side frames of the motorcycle. The joining portions 12 have openings 121 which extend therethrough and which serve as both air intake ports for passage of combustion air to a motor engine of the motorcycle, and as wiring ports for receiving the wiring of the motorcycle. However, since a portion of the wiring is exposed from the system, additional fasteners are needed to secure the exposed wiring, which may adversely affect the appearance of the motorcycle. Moreover, since each of the openings 121 is provided to accommodate both the wiring and airflow, assembly is rendered complicated.

Referring to Fig. 2, another conventional air intake system is disclosed in Japanese Patent Application No. 2001-152990, which includes a head tube 3 formed with a head block 2 to define first and second air ducts 21, 22. A front wall of the head block 2 defines an air intake port 23 for passage of air to an air cleaner (not shown) through the first and second air ducts 21, 22. However, when air enters the air intake port 23, the flow of air rams against the head tube 3 and is bifurcated, thereby generating a turbulent flow of air, which may affect the supply of combustion air entering the air cleaner.

The object of the present invention is to provide an air intake system for supplying sufficient combustion air to a motor engine of a motorcycle, and having an independent space for accommodating wiring for the motorcycle.

According to this invention, the air intake system includes a head tube, a head block, and an air flow directing unit.

The head tube is adapted to be disposed forwardly of left and right connected ends of left and right side frames of a motorcycle, and extends along a steering axis in an upright direction. The head tube has left and right shell halves connected to each other at front and rear junctures.

The head block defines an accommodation chamber which extends in a transverse direction to terminate at left and right inner wall surfaces, and which extends in the longitudinal direction to terminate at forward and rearward end walls. The rearward end wall is adapted to connect the left and right connected ends such that the left and right side frames are bifurcated from the rearward end wall. The head block is formed with the head tube. Thus, the left and right inner wall surfaces are respectively spaced apart from the left and right shell halves to define left and right communicating ducts, respectively. The forward and rearward end walls cooperate with the front and rear junctures to define front and rear passageways, respectively.

The forward end wall has first and second intake ports juxtaposed to each other. As a result of racing of the motorcycle, air is scooped through at least one of the first and second intake ports to blow along a path heading towards the front juncture.

The rearward end wall has an outlet port adapted to be interposed between the left and right side frames for passage of combustion air to the air cleaner.

The air flow directing unit is disposed in the front passageway, and is configured to permit the air scooped through one of the first and second intake ports to flow only through a respective one of the left and right communicating ducts having the features of claim 1.

Other features and advantages of the present invention will become apparent in the following detailed description of the preferred embodiment of the invention, with reference to the accompanying drawings, in which:
Fig. 1 is a perspective view of a conventional air intake system for a motorcycle;
Fig. 2 is a fragmentary sectional view of another conventional air intake system for a motorcycle;
Fig. 3 is a perspective view of the preferred embodiment of an air intake system according to this invention when connected to a frame of a motorcycle;
Fig. 4 is a perspective view of the preferred embodiment;
Fig. 5 is a partly-sectioned perspective view of the preferred embodiment, showing a wiring accommodation path therein; and
Fig. 6 is a partly-sectioned perspective view of the preferred embodiment, showing an air flow path therein.

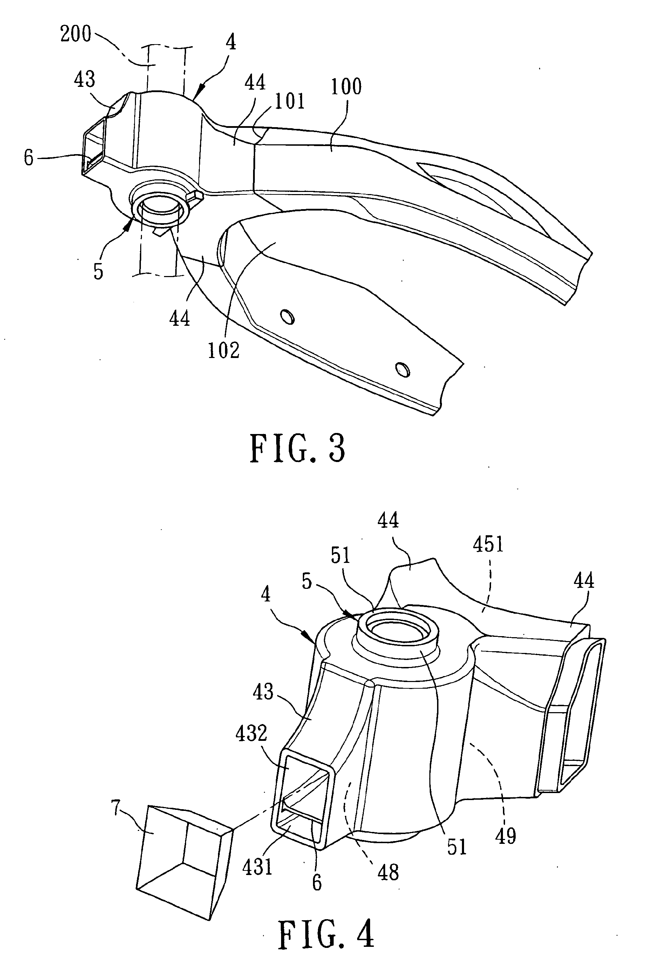

Referring to Figs. 3 and 4, the preferred embodiment of an air intake system according to the present invention is employedinamotorcycle (notshown) for supplying combustion air to a motor engine (not shown) of the motorcycle. The motorcycle further includes: left and right side frames 100 which extend forwardly in a longitudinal direction to terminate at left and right connected ends 101, respectively, and which are spaced apart from each other in a transverse direction to define an accommodation space 102 therebetween; and an air cleaner (not shown) disposed in the accommodation space 102 to supply cleaned combustion air to the motor engine.

The air intake system is shown to comprise a head tube 5, a head block 4, an air flow directing unit 6, a partition wall 8, and an air scoop 7.

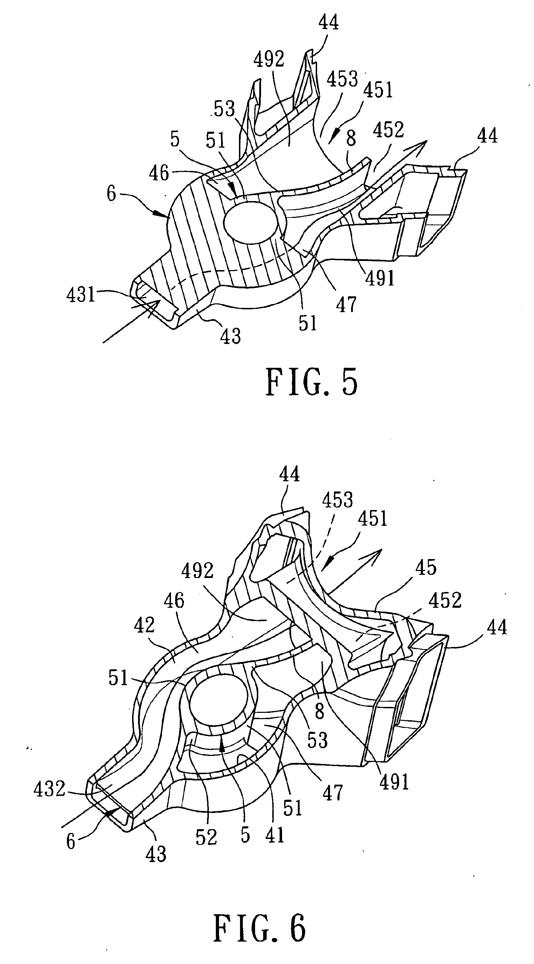

With reference to Figs. 5 and 6, the head tube 5 is adapted to be disposed forwardly of the left and right connected ends 101, and extends along a steering axis in an upright direction for mounting of a steering rod 200 of the motorcycle thereon. The head tube 5 has left and right shell halves 51 which are connected to each other at front and rear junctures 52, 53 that are spaced apart from each other in the longitudinal direction.

The head block 4 defines an accommodation chamber which extends in the transverse direction to terminate at left and right inner wall surfaces 41, 42, and which extends in the longitudinal direction to terminate at forward and rearward end walls 43, 45. The rearward end wall 45 has left and right extending portions 44 which are adapted to be connected respectively to the left and right connected ends 101 of the left and right side frames 100 such that the left and right side frames 100 are bifurcated from the rearward end wall 45.

The head block 4 is integrally formed with the head tube 5 such that the left and right inner wall surfaces 41, 42 are respectively spaced apart from the left and right shell halves 51 in the transverse direction so as to define left and right communicating ducts 47, 46, and such that, the forward and rearward end walls 43, 45 cooperate with the front and rear junctures 52, 53 to define front and rear passageways 48, 49, respectively.

The forward end wall 43 has first and second intake ports 431, 432 which are juxtaposed to each other, and which are configured such that, as a result of racing of the motorcycle, air scooped through at least one of the first and second intake ports 431, 432, blows along a path heading towards the front juncture 52. In this embodiment, the first and second intake ports 431, 432 are opposite to each other in the upright direction. It is noted that the first and second intake ports 431, 432 may be juxtaposed to each other in any direction.

The rearward end wall 45 has an outlet port 451 which is adapted to be interposed between the left and right side frames 100 for passage of combustion air to the air cleaner.

The air flow directing unit 6 is disposed in the front passageway 48, and is configured to permit the air scooped through one of the first and second intake ports 431, 432 to flow only through the right communicating duct 46.

The partitioning wall 8 extends from the head tube 5 adjacent to the rear juncture 53 to the rearward end wall 45 so as to divide the rear passageway 49 into left and right channels 491, 492, which are non-communicable with each other, and which are respectively disposed downstream of the left and right communicating ducts 47, 46. Further, the partitioning wall 8 is configured to divide the outlet port 451 into left and right outlet sub-ports 452, 453. In this embodiment, the right outlet sub-port 453 is larger than the left outlet sub-port 452.

The air scoop 7 is detachably mounted on the forward end wall 43 to permit introduction of an increased amount of air into the second intake port 432.

In this embodiment, the first intake port 431, the left communicating duct 47, the left channel 491, and the left outlet sub-port 452 cooperatively constitute a wiring accommodation path, as indicated by the arrows in Fig. 5, for accommodating the wirings (not shown) leading out from the left outlet sub-port 452. The second intake port 432, the right communicating duct 46, the right channel 492, and the right outlet sub-port 453 cooperatively constitute an air flow path, as indicated by the arrows in Fig. 6, for introducing air into the air cleaner. Alternatively, the first intake port 431, the left communicating duct 47, the left channel 491, and the left outlet sub-port 452 may cooperatively constitute an air flow path, and the second intake port 432, the right communicating duct 46, the right channel 492, and the right outlet sub-port 453 may cooperatively constitute a wiring accommodation path.

As illustrated, the air intake system according to this invention can supply sufficient combustion air to a motor engine of a motorcycle, and provides an independent space for accommodating the wiring of the motorcycle without requiring any additional wiring ports. Most of the wiring can be accommodated in the wiring accommodating path to improve the appearance of the motorcycle and to simplify the task of wiring. Furthermore, due to the provision of two separate, non-communicated paths for the wiring and air flow, introduced air is directed to blow rearwardly so as not to cause an undesirable turbulent flow of air. Hence, sufficient air flow can be supplied to the motor engine.

## Claims

1. An air intake system for supplying combustion air to a motor engine of a motorcycle, said motorcycle further including: first and second side frames (100) which extend forwardly in a longitudinal direction to terminate at first and second connected ends (101), respectively, and which are spaced apart from each other in a transverse direction to define an accommodation space (102) therebetween, and an air cleaner disposed in the accommodation space (102) to supply cleaned combustion air to the motor engine, said air intake system comprising:
a head tube (5) which is adapted to be disposed forwardly of the first and
second connected ends (101), and which extends along a steering axis (200) in an upright direction, said head tube (5) having first and second shell halves (51) which are connected to each other at front and rear junctures (52, 53) that are spaced apart from each other in the longitudinal direction, wherein
said air intake system further comprises:
a head block (4) which defines an accommodation chamber that extends in the transverse direction to terminate at first and second inner wall surfaces (41, 42), and that extends in the longitudinal direction to terminate at forward and rearward end walls (43, 45), said rearward end wall (45) being adapted to connect the first and second connected ends (101) such that the first and second side frames (100) are bifurcated from said rearward end wall (45),
said head block (4) being formed with said head tube (5) such that said first and second inner wall surfaces (41, 42) are respectively spaced apart from the first and second shell halves (51) in the transverse direction so as to define first and second communicating ducts (47, 46), respectively, and such that said forward and rearward end walls (43, 45) cooperate with said front and rear junctures (52, 53) to define front and rear passageways (48, 49), respectively,
said forward end wall (43) having first and second intake ports (431, 432) which are juxtaposed to each other, and which are configured such that, as a result of racing of the motorcycle, air scooped through at least one of said first and second intake ports (431, 432), blows along a path heading towards said front juncture (52),
said rearward end wall (45) having an outlet port (451) which is adapted to be interposed between the first and second side frames (100) for passage of combustion air to the air cleaner;
an air flow directing unit (6) disposed in said front passageway (48), and configured to permit the air scooped through said one of said first and second intake ports (431, 432) to flow only through a respective one of said first and second communicating ducts (46, 47); and
a partitioning wall (8) which extends from said head tube (5) adjacent to said rear juncture (53) towards said rearward end wall (45) so as to divide said rear passageway (49) into first and second channels (491, 492) that are non-communicable with each other, and that are respectively disposed downstream of said first and second communicating ducts (46, 47),
said partitioning wall (8) being configured such that said outlet port (451) is divided into first and second outlet sub-ports (452, 453), and such that one of said first and second outlet sub-ports (453,452) is larger than the other one of said first and second outlet sub-ports (452,453),
said one of said first and second outlet sub-ports (452,453) serving as a wiring port through which wiring of the motorcycle is led out.

2. The air intake system according to Claim 1, **characterized in that** said first and second intake ports (431, 432) are opposite to each other in the upright direction.

## Patentansprüche

1. Lufteinlasssystem zur Zufuhr von Verbrennungsluft zu einem Motor eines Motorrads, wobei das Motorrad weiter umfasst: einen ersten und einen zweiten Seitenrahmen (100), die sich in Längsrichtung voraus erstrecken und an ersten beziehungsweise zweiten Anschlussenden (101) enden, und die zur Begrenzung eines dazwischen liegenden Aufnahmeraums (102) in Querrichtung voneinander beabstandet sind, und einen im Aufnahmeraum (102) angeordneten Luftfilter zur Versorgung des Motors mit gereinigter Verbrennungsluft, wobei das Lufteinlasssystem aufweist:
- ein Steuerkopfrohr (5), das so angepasst ist, dass es vor dem ersten und zweiten Anschlussende (101) positionierbar ist, und das sich entlang einer Lenkerachse (200) in vertikaler Richtung erstreckt, wobei das Steuerkopfrohr (5) eine erste und eine zweite Halbschale (51) besitzt, die an voneinander in Längsrichtung beabstandeten vorderen und hinteren Verbindungspunkten (52,53) miteinander verbunden sind,
wobei das Lufteinlasssystem weiterhin aufweist:
- einen Steuerkopf (4), der eine Aufnahmekammer begrenzt, die sich in Querrichtung erstreckt und an einer ersten und einer zweiten Wandinnenseite (41,42) endet, und die sich in Längsrichtung erstreckt und an einer vorderen und einer rückwärtigen Stirnwand (43,45) endet, wobei die rückwärtige Stirnwand (45) so ausgebildet ist, dass das erste und zweite Anschlussende (101) derart verbindbar ist, dass sich der erste und zweite Seitenrahmen (100) von der rückwärtigen Stirnwand (45) aus gabelförmig teilen, wobei
- der Steuerkopf (4) mit dem Steuerkopfrohr (5) derart ausgebildet ist, dass die erste und zweite Wandinnenseite (41,42) jeweils von der ersten und zweiten Halbschale (51) in Querrichtung beabstandet ist, um einen ersten beziehungsweise einen zweiten Übertragungskanal (47,46) zu bilden, und dass die vordere und rückwärtige Stirnwand (43,45) mit dem vorderen und hinteren Verbindungspunkt (52,53) so zusammenwirken, dass ein vorderer beziehungsweise ein hinterer Durchgang (48,49) gebildet wird, wobei die vordere Stirnwand (43) eine erste und eine zweite Ansaugöffnung (431,432) aufweist, die nebeneinander angeordnet sind, und die derart ausgestaltet sind, dass beim Fahren des Motorrads durch wenigstens eine der ersten und zweiten Ansaugöffnungen (431,432) geschöpfte Luft entlang eines Strömungswegs strömt, der zu dem vorderen Verbindungspunkt (52) führt,
wobei die rückwärtige Stirnwand (45) eine Auslassöffnung (451) besitzt, die so ausgebildet ist dass sie zwischen dem ersten und dem zweiten Seitenrahmen (100) zur Bildung eines Wegs der Verbrennungsluft zum Luftfilter eingefügt ist,
wobei eine Luftstromleiteinheit (6) vorgesehen ist, die im vorderen Durchgang (48) angeordnet und so ausgestaltet ist, dass die durch wenigstens eine der ersten und zweiten Ansaugöffnungen (431,432) geschöpfte Luft nur durch einen zugeordneten Übertragungskanal der beiden ersten oder zweiten Übertragungskanäle (46,47) fließt,
wobei eine Trennwand (8), sich so vom Steuerkopfrohr (5) angrenzend an den hinteren Verbindungspunkt (53) bis zur rückwärtigen Stirnwand (45) erstreckt, dass der hintere Durchgang (49) in einen ersten und einen zweiten Kanal (491,492) aufgeteilt wird, die nicht miteinander kommunizierbar miteinander sind und die jeweils stromabwärts vom ersten und zweiten Übertragungskanals (46,47) angeordnet sind,
wobei die Trennwand (8) derart ausgestaltet ist, dass die Auslassöffnung (451) in eine erste und eine zweite Ausgangsteilöffnung (452,453) unterteilt ist, und dass eine der ersten und zweiten Ausgangsteilöffnungen (453,452) größer als die jeweils andere ist, und
wobei eine der ersten und zweiten Ausgangsteilöffnungen (452,453) als Kabeldurchführöffnung dient, durch die Kabel des Motorrads herausgeführt wird.

2. Lufteinlasssystem nach Anspruch 1, **dadurch gekennzeichnet, dass** sich die erste und zweite Ansaugöffnung (431,432) in vertikaler Richtung einander gegenüberliegen.

## Revendications

1. Système de prise d'air pour apporter de l'air de combustion à un moteur d'une motocyclette, laquelle motocyclette comprend en outre : des premier et deuxième cadres latéraux (100) qui s'étendent vers l'avant dans le sens longitudinal pour se terminer à des première et deuxième extrémités reliées (101), respectivement, et qui sont espacés l'un de l'autre dans le sens transversal pour définir un espace de logement (102) entre eux, et un purificateur d'air disposé dans l'espace de logement (102) pour fournir de l'air de combustion purifié au moteur, ledit système de prise d'air comprenant :
un tube de direction (5) qui est adapté pour être disposé sur l'avant des première et deuxième extrémités reliées (101), et qui s'étend le long d'un axe de direction (200) dans le sens vertical, lequel tube de direction (5) possède des première et deuxième demi-coques (51) qui sont reliées l'une à l'autre au niveau de jonctions avant et arrière (52, 53) écartées l'une de l'autre dans le sens longitudinal, ledit système de prise d'air comprenant en outre : un bloc de direction (4) définissant une chambre de logement qui s'étend dans le sens transversal pour se terminer au niveau d'une première et d'une seconde surfaces intérieures de paroi (41, 42), et qui s'étend dans le sens longitudinal pour se terminer au niveau de parois d'extrémité avant et arrière (43, 45), ladite paroi d'extrémité arrière (45) étant adaptée pour relier les première et deuxième extrémités reliées (101) de telle façon que les premier et deuxième cadres latéraux (100) bifurquent à partir de ladite paroi d'extrémité arrière (45),
ledit bloc de direction (4) étant formé avec ledit tube de direction (5) de telle façon que lesdites première et seconde surfaces intérieures de paroi (41, 42) soient écartées respectivement des première et deuxième demi-coques (51) dans le sens transversal afin de définir des premier et deuxième conduits de communication (47, 46), respectivement, et de telle façon que lesdites parois d'extrémité avant et arrière (43, 45) coopèrent avec lesdites jonctions avant et arrière (52, 53) pour définir des passages avant et arrière (48, 49), respectivement,
ladite paroi d'extrémité avant (43) ayant des premier et deuxième orifices d'entrée (431, 432) juxtaposés l'un à l'autre, qui sont configurés de telle façon qu'à la suite du déplacement de la motocyclette, l'air recueilli à travers au moins un desdits premier et
deuxième orifices d'entrée (431, 432) souffle le long d'un trajet allant vers ladite jonction avant (52),
ladite paroi d'extrémité arrière (45) possédant un orifice de sortie (451) qui est adapté pour s'interposer entre les premier et deuxième cadres latéraux (100) pour le passage d'air de combustion dans le purificateur d'air ;
une unité de direction du flux d'air (6) disposée dans ledit passage avant (48) et configurée pour permettre à l'air recueilli à travers l'un desdits premier et deuxième orifices d'entrée (431, 432) de circuler seulement à travers l'un desdits premier et deuxième conduits de communication (46, 47) correspondants ; et
une cloison (8) qui s'étend à partir dudit tube de direction (5) près de ladite jonction arrière (53) vers ladite paroi d'extrémité arrière (45) de façon à diviser un passage arrière (49) en un premier canal et un deuxième (491, 492) qui ne peuvent pas communiquer entre eux et
qui sont disposés respectivement en aval desdits premier et deuxième conduits de communication (46, 47),
ladite cloison (8) étant configurée de telle façon que ledit orifice de sortie (451) est divisé en un premier et un deuxième sous-orifices de sortie (452, 453), et de telle façon que l'un desdits premier et deuxième sous-orifices de sortie (453, 452) est plus grand que l'autre desdits premier et deuxième sous-orifices de sortie (452, 453),
celui desdits premier et deuxième sous-orifices de sortie (452, 453) servant d'orifice de câblage par lequel le câblage de la motocyclette passe vers l'extérieur.

2. Système de prise d'air selon la revendication 1, **caractérisé en ce que** lesdits premier et deuxième orifices d'entrée (431, 432) sont situés l'un en face de l'autre dans le sens vertical.
